# EUROPÄISCHE PATENTSCHRIFT

(11) **EP 0 715 182 B1**
(45) Veröffentlichungstag und Bekanntmachung des Hinweises auf die Patenterteilung: **18.07.2001**
(21) Anmeldenummer: 95118833.3
(22) Anmeldetag: 30.11.1995
(51) Int. Cl.: G01S 3/80

(54) **Verfahren zum Peilen schallabstrahlender oder schallreflektierender Ziele**
Method of finding the direction of a target radiating or reflecting sound waves
Procédé pour déterminer le gisement d'une cible rayonnant or réfléchissant des ondes sonores

(30) Priorität: 02.12.1994 DE 4442935
(43) Veröffentlichungstag der Anmeldung: 05.06.1996
(73) Patentinhaber: STN ATLAS Elektronik GmbH, 28305 Bremen (DE)
(72) Erfinder: Roeckerath-Ries, Marie-Theres, Prof. Dr., D-44287 Dortmund (DE); Arens, Egidius, Dipl.-Ing. (FH), D-2807 Achim (DE)
(74) Vertreter: Thul, Hermann, Dipl.-Phys.

(56) Entgegenhaltungen:
- DE-A- 3 239 403
- DE-A- 3 832 678
- US-A- 4 470 048
- US-A- 5 099 456
- US-A- 5 216 640
- SPEECH PROCESSING 2, AUDIO, NEURAL NETWORKS, UNDERWATER ACOUSTICS, SAN FRANCISCO, MAR. 23 - 26, 1992, Bd. 2, INSTITUTE OF ELECTRICAL AND ELECTRONICS ENGINEERS, Seiten 413-416, XP 000356914 BOUVET M ET AL 'IMPLANTATION OF A HIGH-RESOLUTION METHOD IN A SONAR SYSTEM'
- PATENT ABSTRACTS OF JAPAN Bd. 9, Nr. 127 (P-360) <1850> 31 Mai 1985 & JP 60 010 190 A (BOEICHO GIJUTSU KENKYU HONBU) 19 Januar 1985

## Beschreibung

Die Erfindung betrifft ein Verfahren zum Peilen schallabstrahlender oder schallreflektierender Ziele mit einer Anzahl benachbarter, sich überlappender Richtcharakteristiken der im Oberbegriff des Anspruchs 1 genannten Art.

In der amerikanischen Patentschrift US 5 216 640 wird ein Sonar-Peilsystem mit elektroakustischen Wandlern beschrieben, bei dem die Richtungsbildung durch Lösen des Fourierintegrals über dem Wandlerort erfolgt.

Bei akustischen Peilanlagen in der Wasserschalltechnik und der Luftschalltechnik werden Schallwellen bezüglich ihrer Einfallsrichtung zum Peilen von Zielen ausgewertet. Das Ziel strahlt z. B. breitbandig sein Fahrgeräusch ab oder es reflektiert Schallwellen, die zu Ortungszwecken ausgesendet wurde. Die Peilanlage enthält eine Wandleranordnung mit elektroakustischen Wandlern zum Bilden von Richtcharakteristiken, die in vorgebbare Hauptempfangsrichtungen weisen. Benachbarte Richtcharakteristiken überlappen sich. Bei Detektion eines Zieles weisen Gruppensignale der in Richtung des Ziels weisenden Richtcharakteristiken größere Werte auf als die übrigen Richtcharakteristiken. Zur Bestimmung der Einfallsrichtung wird eine Winkelfunktion aus diesen Gruppensignalen in Abhängigkeit von ihren Hauptempfangsrichtungen gebildet. Die Gruppensignale sind Abtastwerte und ihre Hauptempfangsrichtungen unabhängige Variable der Winkelfunktion. Das Maximum der Winkelfunktion kennzeichnet die Einfallsrichtung der Schallwellen und somit die Peilung zum Ziel. Eine solche Peilanlage ist beispielsweise in der DE-OS 38 32 678 beschrieben. Zur Bestimmung der Lage des Maximums der Winkelfunktionen wird eine komplexe Fourier-Transformation der Winkelfunktion in einen Raumfrequenzbereich durchgeführt und die Phase der Grundwelle der transformierten Winkelfunktion bestimmt, die die Peilung zum Ziel angibt. Die Raumfrequenz der Winkelfunktion ist unabhängig von der Lage und der Anzahl der Ziele.

Die Genauigkeit dieses Peilverfahrens nimmt ab, wenn die Gruppensignale, mit denen die Winkelfunktion gebildet wird, durch andere Geräusche als die vom Ziel stammenden Geräusche gestört sind. Störungen gehen unmittelbar in die Form der Winkelfunktion ein und verschieben die Lage des Maximums, insbesondere dann, wenn dicht benachbarte Ziele von den gleichen Richtcharakteristiken erfaßt werden. Bei der Transformation erhält man keine einzelne Spektrallinie bei der Raumfrequenz der Grundwelle, sondern einen Funktionsverlauf mit einem Maximalwert, der um so weniger signifikant herausragt, je größer die Störungen sind. Dieser Maximalwert kennzeichnet die Grundwelle. Da die Lage des Maximums der Winkelfunktion unmittelbar die Phase der Grundwelle der transformierten Winkelfunktion bestimmt, sind somit die Peilungen um so ungenauer, je weniger gut ausgeprägt das Maximum ist.

Es ist Aufgabe der vorliegenden Erfindung ein Verfahren zum Peilen schallabstrahlender oder schallreflektierender Ziele der im Oberbegriff des Anspruchs 1 genannten Art zu schaffen, bei dem Störungen, die über die einzelnen Richtcharakteristiken empfangen werden, ausgeglichen und dicht benachbarte Ziele erkannt werden. Diese Aufgabe wird erfindungsgemäß durch die im Kennzeichenteil des Anspruchs 1 genannten Merkmale gelöst.

Im ungestörten Empfangsfall wird mit den sich überlappenden Richtcharakteristiken abhängig von der Einfallsrichtung der vom Ziel kommenden Schallwellen jedes Gruppensignal einen bestimmten Pegel aufweisen und die mit diesen Pegeln als Abtastwerte gebildete Winkelfunktion einen charakteristischen idealen Verlauf aufweisen. Dieser ideale Verlauf wird erfindungsgemäß durch eine Referenzfunktion nachgebildet. Im realen Empfangsfall weicht die Winkelfunktion vom idealen Verlauf ab. Winkelfunktion und Referenzfunktion werden miteinander verglichen. Die Abweichungen sind ein Maß für das Nutz/Störverhältnis.

Zur Bestimmung der Peilung wird die Referenzfunktion über ihrer unabhängigen Variablen verschoben. Bei einer Deckung ihres Maximums mit dem Maximum der Winkelfunktion gibt der Verschiebungswinkel die Peilung zum Ziel an. Der Vorteil des erfindungsgemäßen Verfahrens nach Anspruch 1 besteht insbesondere darin, daß nicht die winkelmäßige Lage des Maximums aus der Winkelfunktion selbst bestimmt werden muß. Störungen im Funktionsablauf der Winkelfunktion durch Abweichungen der Gruppensignale vom Idealwert, die zu einer Verbreiterung des Maximums der Winkelfunktion führen, werden durch den Vergleich mit der Referenzfunktion deutlich erkennbar, führen aber nicht zu einer Verschlechterung des Peilergebnisses.

Nach Detektion eines Ziels durch Pegelvergleich benachbarter Richtcharakteristiken ist es besonders vorteilhaft gemäß der Weiterbildung des erfindungsgemäßen Verfahrens nach Anspruch 2 das Maximum der Referenzfunktion in die Hauptempfangsrichtung derjenigen Richtcharakteristik zu legen, deren Gruppensignal den größten Pegel aufweist. Eine anschließende Faltung oder Kreuzkorrelationsfunktion von Winkelfunktion und Referenzfunktion gemäß der vorteilhaften Weiterbildung nach Anspruch 3 liefert die Peilung zum Ziel. Das absolute Maximum des Faltungsintegrals oder der Kreuzkorrelationsfunktion ist um so ausgeprägter und schmaler je besser das Nutz/Störverhältnis ist. Aber auch bei einem breiten Maximum der Winkelfunktion ist durch diese Signalverarbeitung eine deutliche Verbesserung der Peilergebnisse zu verzeichnen. Bei einer Winkelfunktion mit breitem Maximum, wenn beispielsweise zwei oder mehr Abtastwerte oder Gruppensignale gleich hohe Pegel aufweisen, ist es nicht auszuschließen, daß zwei oder mehrere Ziele innerhalb eines Winkelsektors zwischen Hauptempfangsrichtungen zweier benachbarter Richtcharakteristiken erfaßt werden. Um auch dann eine exakte Peilung zumindest in Richtung des akustischen Schwerpunkts der Ziele zu erhalten, wird gemäß der vorteilhaften Weiterbildung nach Anspruch 4 die Referenzfunktion für mindestens zwei benachbarte Ziele simuliert und mit der Winkelfunktion korreliert.

Um festzustellen, ob ein oder zwei Ziele von den benachbarten Richtcharakteristiken erfaßt werden, werden die Korrelationsergebnisse bei Verwendung von zwei oder mehr unterschiedlichen Referenzfunktionen gemäß der vorteilhaften Weiterbildung des erfindungsgemäßen Verfahrens nach Anspruch 5 verglichen. Der Vorteil besteht darin, daß die Referenzfunktion die Zielsituation im ungestörten Fall nachbildet und eine Unterscheidung zwischen einer Zielsituation mit einem Ziel, zwei oder mehreren Zielen gestattet.

Das erfindungsgemäße Verfahren ist bei breitbandigem Empfang vorteilhaft einzusetzen. Um eine weitere Störbefreiung zu erreichen, ist es auch vorgesehen, die Gruppensignale gemäß der vorteilhaften Weiterbildung nach Anspruch 6 einer Frequenzanalyse zu unterwerfen und die einzelnen ausgeprägten Frequenzkomponenten zur Bestimmung der Winkelfunktion und der Referenzfunktion auszuwählen.

Nach der vorteilhaften Weiterbildung des erfindungsgemäßen Verfahrens nach Anspruch 7 wird für den Vergleich zwischen Winkelfunktion und Referenzfunktion das Faltungsintegral oder die Kreuzkorrelationsfunktion für jede Empfangsfrequenz gebildet und anschließend der Mittelwert gebildet, wodurch eine weitere Störbefreiung des Peilungsergebnisses erzielt wird. Da Winkelfunktion und Referenzfunktion gerade Funktionen sind, führt die Faltung zu gleichen Ergebnissen wie die Korrelation.

Es hat sich herausgestellt, daß die Referenzfunktion für breitbandigen Betrieb durch Stützstellen einer Parabel vorteilhaft nachbildbar ist, wobei schon drei Stützstellen ausreichen. Die Korrelation mit der Winkelfunktion erfolgt dann ebenfalls mit drei Abtastwerten benachbarter Richtcharakteristiken. Bei schmalbandigem Betrieb wird die Referenzfunktion vorteilhaft aus Stützstellen von den ersten Legendre-Polynomen gebildet.

Der Vorteil des erfindungsgemäßen Verfahrens nach Anspruch 8 liegt darin, daß mit dem Maximum der Kreuzkorrelationsfunktion ein Winkelbereich angegeben wird, innerhalb dessen die gesuchte Peilung liegen muß, und die einfache Bestimmung der Lage eines Nulldurchgangs der differenzierten Kreuzkorrelationsfunktion im Winkelbereich die exakte Peilung liefert. Die Maximumbestimmung wird also in eine Nulldurchgangsbestimmung überführt, die rechnerisch wesentlich einfacher realisierbar ist als eine Maximuminterpolation mit der Aufgabe, die exakte Lage des Maximums anzugeben.

Besonders vorteilhaft ist es, die Abtastwerte der Winkelfunktion mit diskreten Werten einer differenzierten Referenzfunktion zu multiplizieren, zu summieren und den Verschiebungswinkel zu suchen, für den die Summe "Null" ist. Die Nullstellenbestimmung wird besonders einfach, indem diskrete Werte der Summe verglichen und benachbarte Werte unterschiedlicher Vorzeichen linear interpoliert werden. Statt einer Differentiation ist auch eine Hilberttransformation vorteilhaft durchführbar.

In der DE-OS 38 32 678 wird die Winkelfunktion vom Winkelbereich in einen Raumfrequenzbereich transformiert und das so gewonnene komplexe Spektrum ausgewertet. Dieses Spektrum weist immer bei der gleichen Raumfrequenz eine Grundwelle auf, dessen Phase bestimmt wird, die die Richtung zum Ziel angibt.

Bei der vorteilhaften Weiterbildung des erfindungsgemäßen Verfahrens nach Anspruch 9 werden Winkelfunktion und Referenzfunktion in ein komplexes Spektrum und komplexes Referenzspektrum transformiert. Das Spektrum und das Referenzspektrum werden miteinander verglichen. Sie unterscheiden sich in ihrer Phase, da das Maximum der Winkelfunktion bei einem anderen Winkel als das Maximum der Referenzfunktion liegt. Diese Information bleibt bei der Transformation erhalten und beweist eine Phasenverschiebung zwischen Spektrum und Referenzspektrum, die bei jeder Raumfrequenz gleich ist. Der Betrag des Spektrums und des Referenzspektrums hat jeweils bei der gleichen Raumfrequenz ihren Maximalwert, der die Grundwelle und die Referenzgrundwelle angibt. Deshalb ist es besonders einfach, den Phasenvergleich für Grundwelle und Referenzgrundwelle durchzuführen. Die Differenz der Phasen gibt die Peilung zum Ziel an. Ein Vergleich zwischen anderen Spektrallinien gleicher Raumfrequenz ist genauso möglich. Die Ansprüche 10 und 11 geben Verfahren an, mit denen die Phasendifferenz zwischen Grundwelle und Referenzgrundwelle bestimmt werden. Besonders vorteilhaft ist es, wenn nur die Peilung zu einem Ziel oder zum akustischen Schwerpunkt zweier oder mehrerer Ziele interessiert, die Grundwelle und Referenzgrundwelle konjugiert komplex miteinander zu multiplizieren. Die Phase des Produkts gibt die Peilung an.

Da das Spektrum und auch das Referenzspektrum gerade Funktionen sind, ist die Phase des Produkts gleich der Phase des Quotienten.

Besonders vorteilhaft ist es, die Phase mit einer Quotientenbildung gemäß Anspruch 11 zu bestimmen, wenn untersucht werden soll, ob nicht nur ein Ziel, sondern zwei Ziele mit den gleichen Richtcharakteristiken erfaßt wurden. Bildet man den Betrag dieses Quotienten gemäß der vorteilhaften Weiterbildung nach Anspruch 12, quadriert ihn - gegebenenfalls nach einer Normierung - und zieht "eins" ab, so erhält man als Ergebnis eine Funktion, deren Amplitude ein Pegelverhältnis zweier Ziele und deren Frequenz die Ablage zweier Ziele von ihrem akustischen Schwerpunkt angibt. Diese Frequenz ist "Null", wenn nur ein Ziel gepeilt wird. Der Vorteil des Verfahrens nach Anspruch 14 besteht darin, daß eine Zielsituation analysiert und eine Zieltrennung in einfacher Weise durchgeführt wird, auch dann, wenn die Ziele breitbandig sind und gleiche Frequenzspektren aufweisen, da die Peilung unabhängig von der Empfangsfrequenz ist. Man erhält eine Aussage sowohl über das Pegelverhältnis, als auch über die Ablage der Ziele von ihrem akustischen Schwerpunkt.

Zur Unterscheidung von mehr als zwei Zielen ist es vorteilhaft, als Referenzfunktion eine Richtcharakteristik zu simulieren, die auf den akustischen Schwerpunkt von zwei oder mehreren Zielen ausgerichtet ist. Die Analyse des Betragsquadrats des Quotienten aus Spektrum und Referenzspektrum gibt auch hier Aufschluß über den Zielkomplex. Wenn die Frequenz "Null" ist, liegen zwei Ziele vor, wenn sie ungleich "Null" ist, ist die Zielsituation komplizierter.

Besonders vorteilhaft ist es gemäß der Weiterbildung des erfindungsgemäßen Verfahrens nach Anspruch 13, das Pegelverhältnis und die Ablage der Ziele vom akustischen Schwerpunkt mit Schätzalogrithmen zu ermitteln, die in der Rechnertechnik geläufige Routinen darstellen.

Vorrichtungen zum Ausüben des erfindungsgemäßen Verfahrens sind in den Ansprüchen 14 bis 18 angegeben. Der Vorteil dieser Vorrichtungen besteht darin, daß sie durch übliche Bauteile der Rechnertechnik zu realisieren sind.

Die Erfindung ist anhand eines Ausführungsbeispiels für ein Verfahren zum Peilen schallabstrahlender oder schallreflektierender Ziele mit einer akustischen Peilanlage und Vorrichtungen zum Ausüben des Verfahrens näher dargestellt. Es zeigen:
- Fig. 1: ein Blockschaltbild,
- Fig. 2: eine Zielsituation,
- Fig. 3: Winkelfunktion und Referenzfunktion,
- Fig. 4: eine Erweiterung des Blockschaltbildes gemäß Fig. 1,
- Fig. 5: ein Spektrum,
- Fig. 6: ein Referenzspektrum,
- Fig. 7: eine Zielsituation mit zwei Zielen,
- Fig. 8: Spektrum und Referenzspektrum bei einer Zielsituation gemäß Fig. 7.

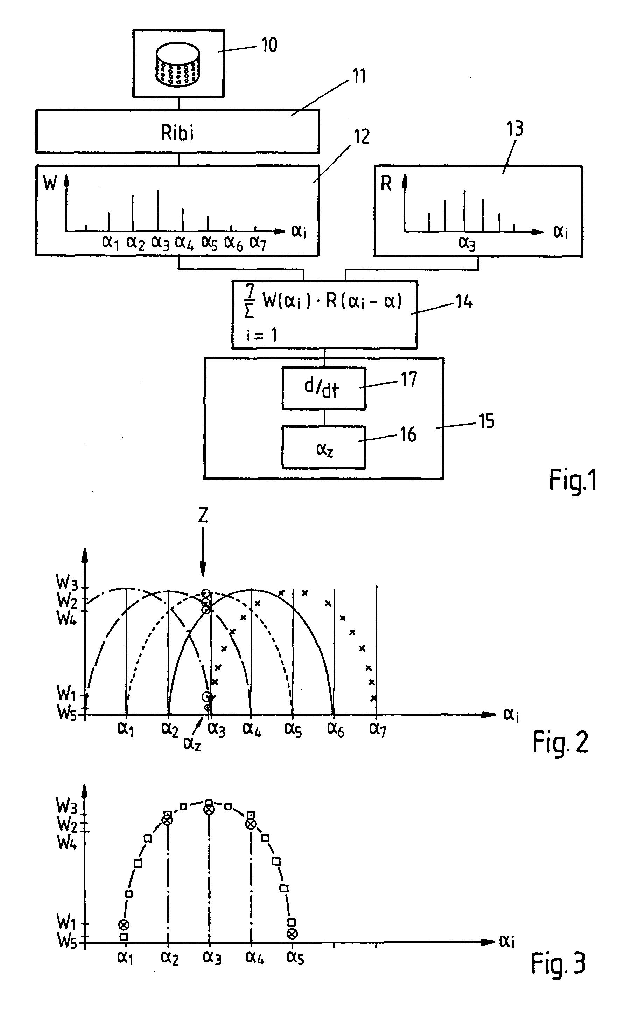

Die akustische Peilanlage in Fig. 1 enthält eine Empfangsanordnung 10 mit elektroakustischen Wandlern auf einer Zylinderbasis. Andere Wandlerkonfigurationen, z. B. Conformed Array oder Linearbasen, sind ebenfalls möglich. Der Empfangsanordnung 10 ist ein Richtungsbildner 11 nachgeordnet, in dem in vorgebbare Hauptempfangsrichtungen α₁, α₂, α₃, ..., α₇ weisende Richtcharakteristiken gemäß Fig. 2 gebildet werden. Ihre Gruppensignale werden als Abtastwerte W₁, W₂, ... W₅ in einer Rechenschaltung 12 zu einer Winkelfunktion W über den Hauptempfangsrichtungen der zugehörigen Richtcharakteristik als unabhängiger Variabler aufgetragen. Eine solche Winkelfunktion W aus Pegelwerten W₁ bis W₅ der Gruppensignale zeigt Fig. 3. Die Richtcharakteristik, die in die Hauptempfangsrichtung α₃ weist, hat den höchsten Pegelwert W₃, die benachbarte Richtcharakteristik mit der Hauptempfangsrichtung α₂ liefert den nächst kleineren Pegelwert W₂ der Winkelfunktion, so daß davon auszugehen ist, daß ein Ziel zwischen den Hauptempfangsrichtungen α₂ und α₃ liegt, da der Pegelwert W₄ der Richtcharakteristik mit der Hauptempfangsrichtung α₄ kleiner als der Pegelwert W₂ ist. Die Pegelwerte W₁, W₂, ..., W₅ der Winkelfunktion W sind mit einem Kreuz und Kreis gekennzeichnet.

In einer Simulationsrechenschaltung 13 wird eine Referenzfunktion R gebildet, die eine Winkelfunktion in ungestörtem Empfangszustand wiedergibt. Sie wird unter einem Referenzwinkel α₃ gebildet, da der größte Abtastwert der Winkelfunktion W von der Richtcharakteristik, die in Hauptrichtung α₃ weist, geliefert wird. Die Referenzfunktion R wird beispielsweise durch Stützwerte einer Parabel oder der ersten Legendre-Polynome gebildet, abhängig davon, wie die Empfangsanordnung und somit die Richtcharakteristiken der Peilanlage aussehen. Die Referenzfunktion R ist ebenfalls in Fig. 3 gezeigt. Ihre Abtastwerte sind mit einem Quadrat gekennzeichnet.

In einer Vergleichsanordnung 14 werden die Winkelfunktion W und die Referenzfunktion R miteinander verglichen, indem das Faltungsintegral oder die Kreuzkorrelationsfunktion gebildet wird. Beide Rechenoperationen führen zum gleichen Ergebnis, da Winkel- und Referenzfunktion gerade Funktionen sind. Die Referenzfunktion R wird über dem Winkel α verschoben, mit der Winkelfunktion W multipliziert und über dem Winkel αᵢ aufsummiert. Das Maximum der Korrelationsfunktion gibt den Verschiebungswinkel bis zur Deckung von Referenzfunktion R und Winkelfunktion W an, der die Ablage des Ziels von der Hauptempfangsrichtung α₃, in die die simulierte Referenzfunktion R weist, kennzeichnet. Die Peilung α_{z} wird in einer Auswerteschaltung 15 auf einer Peilanzeige 16 dargestellt.

Die Auswerteschaltung 15 weist eine Differentiationsstufe mit Nulldurchgangsdetektor 17 auf, der der Vergleichsanordnung 14 nachgeschaltet ist. Die Kreuzkorrelationsfunktion wird differenziert, um den Verschiebungswinkel zu bestimmen, bei dem das Maximum liegt. Die differenzierte Kreuzkorrelationsfunktion weist dort einen Nulldurchgang auf. Die Lage des Nulldurchgangs wird in der Peilanzeige 16 als Peilung zum Ziel unter dem Winkel α_{z} gemäß Fig. 2 angezeigt.

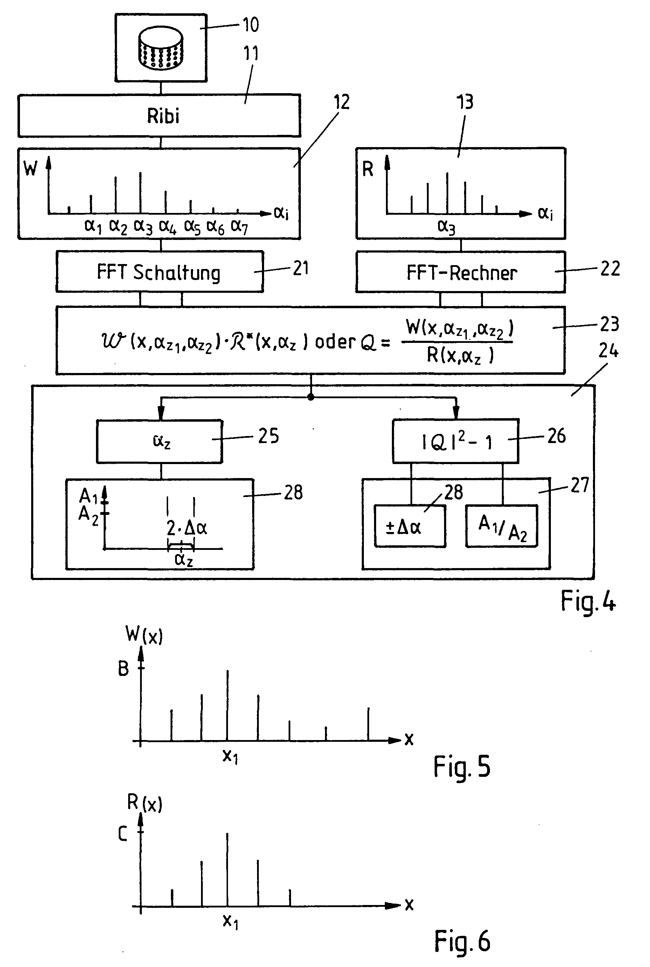

Fig. 4 zeigt eine Erweiterung des Blockschaltbildes nach Fig. 1. In einer Fourier-Transformationsschaltung 21, die der Rechenschaltung 12 nachgeordnet ist, wird die Winkelfunktion W vom Winkelbereich in den Raumfrequenzbereich transformiert. In einem Fourier-Transformationsrechner 22 wird die gleiche Transformation mit der Referenzfunktion R vorgenommen und ein Referenzspektrum gebildet. Das Spektrum der Winkelfunktion ist in Fig. 5 gezeigt. Das Referenzspektrum der Referenzfunktion ist in Fig. 6 gezeigt, das bei der gleichen Raumfrequenz x₁ sein Maximum aufweist, wie das Spektrum in Fig. 5. Weist die Winkelfunktion aus Pegelwerten der Gruppensignale einen Rauschanteil auf, der einem Verschieben der Winkelfunktion um einen Gleichanteil entspricht, so wird dieser Gleichanteil vor dem Bilden des Spektrums abgezogen. Im vorliegenden Fall ist die Winkelfunktion W gemäß Fig. 3 unmittelbar zu transformieren.

Der Vergleich zwischen Winkelfunktion W und Referenzfunktion R wird hier im Raumfrequenzbereich durchgeführt. Das Bilden des Faltungsintegrals oder der Kreuzkorrelationsfunktion in der Vergleichsanordnung 14 wird ersetzt durch eine konjugierte komplexe Multiplikation oder das Bilden eines komplexen Quotienten des Spektrums und des Referenzspektrums.

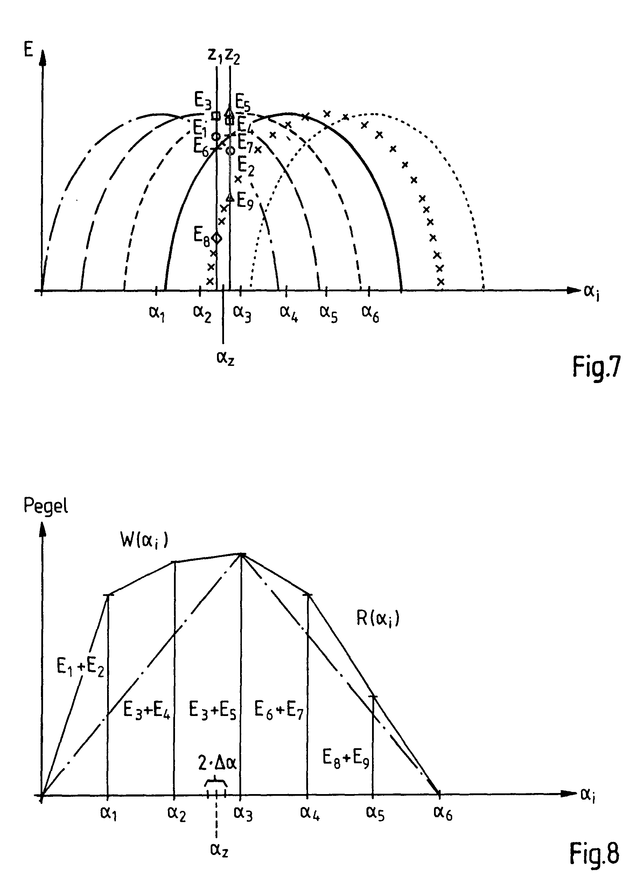

Fig. 7 zeigt eine Empfangssituation, bei der zwei Ziele Z₁ und Z₂ mit der Empfangsanordnung erfaßt werden. Die Richtcharakteristik mit der Hauptempfangsrichtung α₁ empfängt die Pegel E₁+E₂, die Richtcharakteristik mit der Hauptempfangsrichtung α₂ empfängt die Pegel E₃+E₄, die Richtcharakteristik mit der Hauptempfangsrichtung α₃ die Pegel E₃+E₅, die Richtcharakteristik mit der Hauptrichtung α₄ die Pegel E₆+E₇, die Richtcharakteristik mit der Hauptempfangsrichtung α₅ die Pegel E₈+E₉. Sie bilden Abtastwerte der Winkelfunktion W, die in Fig. 7 dargestellt ist. Die Referenzfunktion R wird in die Hauptempfangsrichtung α₃ gelegt und ist in Fig. 7 strichpunktiert dargestellt. Die Ziele Z₁ und Z₂ weisen einen akustischen Schwerpunkt auf, der zwischen den Hauptempfangsrichtungen α₂ und α₃ unter einem Winkel αz liegt. In einer Rechenstufe 23 wird die konjugiert komplexe Multiplikation oder die Quotientenbildung des Spektrums mit dem Referenzspektrum durchgeführt und in einer Phasenberechnungsschaltung 24 mit Peilanzeige die Phase des Quotienten oder des Produkts berechnet, die den Winkel α_{z} liefert, der die Richtung zum Schwerpunkt der beiden Ziele angibt.

Die Phasenberechnungsschaltung 24 enthält außer der Phasenrechenstufe 25 zum Berechnen des Winkel α_{z} einen Betragsbildner 26, in dem das Betragsquadrat des Quotienten |Q|² bestimmt wird. Unter der Annahme, daß beide Ziele den gleichen Winkelabstand Δα von der Richtung ihres akustischen Schwerpunkts α_{z} aufweisen, entspricht das um den Wert "1" verminderte Betragsquadrat |Q|² einer Cosinusfunktion, deren Frequenz die Winkelabweichung Δα der Ziele Z₁, Z₂ von ihrem akustischen Schwerpunkt angibt. Die Amplitude dieser Cosinusfunktion gibt ein Verhältnis der Signalstärken der beiden Ziele Z₁ und Z₂ wieder, die eine Richtcharakteristik empfangen würde, wenn sie in Richtung des akustischen Schwerpunkts αz des Zieles weisen würde.

In einer Auswertungsstufe 27, die dem Betragsbildner 26 nachgeordnet ist, wird das Verhältnis A₁/A₂ der Signalstärken und die Frequenz, die den Winkelabstand ±Δα der beiden Ziele rechts und links von der Richtung α_{z} ihres akustischen Schwerpunkts angibt, berechnet und angezeigt. Die Phasenberechnungsschaltung 24 weist eine Verknüpfungsschaltung 28 auf, in der der Winkel α_{z} und der Winkelabstand ±Δα miteinander verknüpft werden und auf einer Peilanzeige angezeigt werden.

## Patentansprüche

1. Verfahren zum Peilen von schallabstrahlenden oder schallreflektierenden Zielen mit einer Empfangsanlage mit elektroakustischen Wandlern (10), aus deren Empfangssignalen mit einem Richtungsbildner (11) unterschiedliche Gruppensignale bestimmt werden, die benachbarten, sich überlappenden Richtcharakteristiken zugeordnet sind, wobei aus diesen Gruppensignalen eine Winkelfunktion (W(αᵢ)) gebildet wird, die eine Funktion der Hauptempfangsrichtungen (αᵢ) der Richtcharakteristiken ist, und deren Maximum unter einer Schalleinfallsrichtung (α) auftritt, die die Peilung zum Ziel angibt,
**dadurch gekennzeichnet,**
daß aus Stützwerten einer Parabel oder der ersten Legendre-Polynomen in Abhängigkeit von der Empfangsanlage und ihren Richtcharakteristiken eine Referenzfunktion (R(αᵢ)) gebildet wird und daß die Referenzfunktion und die Winkelfunktion (W(αᵢ)) verglichen und bis zur Übereinstimmung gegeneinander verschoben werden und ihr Verschiebungswinkel bei Übereinstimmung die Peilung angibt.

2. Verfahren nach Anspruch 1, dadurch gekennzeichnet, daß das Maximum der Referenzfunktion in die Hauptempfangsrichtung gelegt wird, deren Gruppensignal den größten Pegel aufweist.

3. Verfahren nach Anspruch 1 oder 2, dadurch gekennzeichnet, daß der Vergleich durch Bilden des Faltungsintegrals oder der Kreuzkorrelationsfunktion der Winkelfunktion (W) mit der Referenzfunktion (R) durchgeführt wird und das Maximum die Übereinstimmung liefert.

4. Verfahren nach einem der Ansprüche 1 bis 3, dadurch gekennzeichnet, daß die Referenzfunktion (R) eine Winkelfunktion bei Empfang mindestens zweier Ziele unter einem Schwerpunktreferenzwinkel simuliert.

5. Verfahren nach Anspruch 3 oder 4, dadurch gekennzeichnet, daß die Winkelfunktion (W) mit den ein oder mindestens zwei Zielen zugeordneten Referenzfunktionen verglichen wird und daß ein Maximumvergleich des Faltungsintegrals oder der Korrelationsfunktion durchgeführt wird, der angibt, ob der Verschiebungswinkel die Peilung zu einem Ziel oder in Richtung eines Schwerpunkts zweier oder mehrerer Ziele angibt.

6. Verfahren nach einem der Ansprüche 1 bis 5, dadurch gekennzeichnet, daß mit Frequenzkomponenten der Gruppensignale, die die gleiche Empfangsfrequenz aufweisen, die Winkelfunktion (W) gebildet wird und die Referenzfunktion (R) für die gleiche Empfangsfrequenz simuliert wird.

7. Verfahren nach Anspruch 6, dadurch gekennzeichnet, daß die Faltungsintegrale oder Kreuzkorrelationsfunktionen für jede Empfangsfrequenz gebildet werden und ihr Mittelwert gebildet wird.

8. Verfahren nach einem der Ansprüche 3 bis 7, dadurch gekennzeichnet, daß das Faltungsintegral oder die Kreuzkorrelationsfunktion differenziert und die Nullstelle des differenzierten Faltungsintegrals oder der differenzierten Kreuzkorrelationsfunktion bestimmt wird, die die Peilung zum Ziel oder die Richtung zum Schwerpunkt mindestens zweier Ziele angibt.

9. Verfahren nach Anspruch 1 oder 2, dadurch gekennzeichnet, daß die mit den empfangenen Grupensignalen gebildete Winkelfunktion (W) und mindestens eine Referenzfunktion (R) in ein komplexes Spektrum und Referenzspektrum in einen Raumfrequenzbereich (x) fouriertransformiert werden, daß die Grundwelle des Spektrums und die Referenzgrundwelle des Raumfrequenzspektrums bestimmt werden, daß die Grundwelle mit der Referenzgrundwelle verglichen wird und ihre Phasenverschiebung bestimmt wird, die die Peilung zum Ziel oder die Richtung zum Schwerpunkt mindestens zweier Ziele (Z₁, Z₂) angibt.

10. Verfahren nach Anspruch 9, dadurch gekennzeichnet, daß der Vergleich durch konjugiert komplexe Multiplikation der Grundwelle und der Referenzgrundwelle durchgeführt wird und die Phase des Produkts die Phasenverschiebung angibt.

11. Verfahren nach Anspruch 9, dadurch gekennzeichnet, daß der Vergleich durch Quotientenbildung der Grundwelle und der Referenzgrundwelle durchgeführt wird und die Phase des Quotienten bestimmt wird, die die Phasenverschiebung angibt.

12. Verfahren nach Anspruch 10, dadurch gekennzeichnet, daß das um den Wert "1" verminderte Betragsquadrat des Quotienten aus komplexer Grundwelle und Referenzwelle gebildet wird, daß dessen Amplitude und/oder Frequenz bestimmt werden, daß die Amplitude ein Pegelverhältnis zweier symmetrisch zum Schwerpunkt liegenden Ziele und die Frequenz nach einer Verknüpfung mit der Richtung zum Schwerpunkt die Peilungen zu den beiden Zielen (Z₁, Z₂) angeben.

13. Verfahren nach Anspruch 12, dadurch gekennzeichnet, daß Amplitude und/oder Frequenz durch Schätzalgorithmen ermittelt werden.

14. Vorrichtung zum Ausüben des Verfahrens nach Anspruch 1 bis 9 mit einer Empfangsanlage mit elektroakustischen Wandlern, einem Richtungsbildner zum Bilden von Richtcharakteristiken in vorgebbare Hauptempfangsrichtungen und einer nachgeschalteten Rechenschaltung zum Bilden einer Winkelfunktion aus Gruppensignalen am Ausgang des Richtungsbildners, wobei die Hauptempfangsrichtungen die unabhängige Variable der Winkelfunktion sind, dadurch gekennzeichnet, daß eine Simulationsrechenschaltung (13) zum Bilden mindestens einer Referenzfunktion (R) aus Stützwerten einer Parabel oder der ersten Legendre-Polynomen in Abhängigkeit von der Empfangsanlage und ihren Richtcharakteristiken unter einem vorgebbaren Referenzwinkel (α₃) vorhanden ist, und die Rechenschaltung (12) zum Bilden der Winkelfunktion (W) mit einer Vergleichsanordnung (14) zum Falten oder Korrelieren der Winkelfunktion (W) mit der Referenzfunktion (R) verbunden sind, daß der Vergleichsanordnung (14) eine Auswerteschaltung (15) mit Peilanzeige (16) nachgeschaltet ist.

15. Vorrichtung nach Anspruch 14, dadurch gekennzeichnet, daß die Auswerteschaltung (15) zum Finden des absoluten Maximums ausgelegt ist.

16. Vorrichtung nach Anspruch 14, dadurch gekennzeichnet, daß die Auswerteschaltung (15) eine Differentiationsstufe (17) mit nachgeschaltetem Nulldurchgangsdetektor enthält.

17. Vorrichtung zum Ausüben des Verfahrens nach den Ansprüchen 1 und 9 bis 13 mit einer Empfangsanlage mit elektroakustischen Wandlern, einem Richtungsbildner zum Bilden von Richtcharakteristiken in vorgebbare Hauptempfangsrichtungen und einer nachgeschalteten Rechenschaltung zum Bilden einer Winkelfunktion aus Gruppensignalen am Ausgang des Richtungsbildners, wobei die Hauptempfangsrichtungen die unabhängige Variable der Winkelfunktionen sind, und mit einer der Rechenschaltung nachgeschalteten Fourier-Transformationsschaltung, dadurch gekennzeichnet, daß eine Simulationsrechenschaltung (13) zum Bilden mindestens einer Referenzfunktion (R) aus Stützwerten einer Parabel oder der ersten Legendre-Polynomen in abhängigkeit von der Empfangsanlage und ihren Richtcharacteristiken unter einem vorgebbaren Referenzwinkel (α₃) mit einem Fourier-Transformationsrechner (22) zusammengeschaltet ist, daß die Fourier-Transformationsschaltung (21) und der Fourier-Transformationsrechner (22) mit einer Rechenstufe (23) zum Bilden einer konjugiert komplexen Multiplikation oder eines komplexen Quotienten verbunden sind, daß der Rechenstufe (23) eine Phasenberechnungsschaltung (24) mit Peilanzeigestufe nachgeschaltet ist.

18. Vorrichtung nach Anspruch 17, dadurch gekennzeichnet, daß die Phasenberechnungsschaltung (24) einen Betragsbildner (26) zum Bilden des Betragsquadrats des Quotienten und eine nachgeordnete Auswertestufe (27) zum Bestimmen von Amplitude und Frequenz enthält und daß der Auswertestufe (27) eine Verknüpfungsschaltung (28) mit Peilanzeige nachgeschaltet ist.

## Claims

1. Method for finding the direction of targets which emit or reflect sound, using a receiving system with electroacoustic transducers (10) from whose received signals different group signals are determined using a direction forming device (11), which group signals are associated with adjacent, overlapping directional characteristics, with an angle function (W(αᵢ)) being formed from these group signals and being a function of the main reception directions (αᵢ) of the directional characteristics, and whose maximum occurs at a sound incident direction (α) which indicates the direction of the target,
**characterized**
in that a reference function (R(αᵢ)) is formed from support values of a parabola or from the first Legendre polynomial as a function of the receiving system and its directional characteristics, and in that the reference function and the angle function (W(αᵢ)) are compared and are shifted with respect to one another until they match, and their displacement angle when they match indicates the direction.

2. Method according to Claim 1, characterized in that the maximum of the reference function is placed in the main reception direction whose group signal has the greatest level.

3. Method according to Claim 1 or 2, characterized in that the comparison is carried out by forming the convolution integral or the cross-correlation function of the angle function (W) with the reference function (R), and the maximum provides the match.

4. Method according to one of Claims 1 to 3, characterized in that the reference function (R) simulates an angle function on reception of at least two targets at a centroid reference angle.

5. Method according to Claim 3 or 4, characterized in that the angle function (W) is compared with the reference functions which are associated with one or at least two targets, and in that a maximum comparison of the convolution integral or of the correlation function is carried out which indicates whether the displacement angle indicates the direction to a target or the direction to a centroid of two or more targets.

6. Method according to one of Claims 1 to 5, characterized in that the angle function (W) is formed using frequency components of the group signals which have the same reception frequency, and the reference function (R) is simulated for the same reception frequency.

7. Method according to Claim 6, characterized in that the convolution integrals or cross-correlation functions are formed for each reception frequency, and their mean value is formed.

8. Method according to one of Claims 3 to 7, characterized in that the convolution integral or the cross-correlation function is differentiated, and the zero of the differentiated convolution integral or of the differentiated cross-correlation function is determined, which indicates the direction to the target or the direction to the centroid of at least two targets.

9. Method according to Claim 1 or 2, characterized in that the angle function (W) formed using the received group signals, and at least one reference function (R), are Fourier-transformed into a complex spectrum, and a reference spectrum is Fourier-transformed into a space-frequency domain (x), in that the fundamental of the spectrum and the reference fundamental of the space-frequency spectrum are determined, in that the fundamental is compared with the reference fundamental and their phase shift is determined which indicates the direction to the target or the direction to the centroid of at least two targets (Z₁, Z₂).

10. Method according to Claim 9, characterized in that the comparison is carried out by complex-conjugate multiplication of the fundamental and of the reference fundamental, and the phase of the product indicates the phase shift.

11. Method according to Claim 9, characterized in that the comparison is carried out by forming the quotient of the fundamental and the reference fundamental, and the phase of the quotient is determined, which indicates the phase shift.

12. Method according to Claim 10, characterized in that the square of the magnitude of the quotient of the complex fundamental and the reference value minus the value "1" is formed, in that its amplitude and/or frequency are determined, in that the amplitude indicates a level ratio of two targets, which are located symmetrically about the centroid, and the frequency after being linked to the direction of the centroid indicates the directions to the two targets (Z₁, Z₂).

13. Method according to Claim 12, characterized in that the amplitude and/or frequency are/is determined by estimation algorithms.

14. Apparatus for carrying out the method according to Claims 1 to 9 with a receiving system with electroacoustic transducers, a direction forming device for forming directional characteristics in main receiving directions which can be predetermined, and a downstream computation circuit for forming an angle function from group signals at the output of the direction forming device, with the main receiving directions being the independent variable in the angle function, characterized in that a simulation computation circuit (13) is provided in order to form at least one reference function (R) from support values of a parabola or of the first Legendre polynomial as a function of the receiving system and its direction characteristics at a reference angle (α₃) which can be predetermined, and the computation circuit (12) for forming the angle function (W) is connected to a comparison arrangement (14) for convolution or correlation of the angle function (W) with the reference function (R), in that the comparison arrangement (14) is followed by an evaluation circuit (15) with a direction indication (16).

15. Apparatus according to Claim 14, characterized in that the evaluation circuit (15) is designed to find the absolute maximum.

16. Apparatus according to Claim 14, characterized in that the evaluation circuit (15) contains a differentiation stage (17) with a downstream zero-crossing detector.

17. Apparatus for carrying out the method according to Claims 1 and 9 to 13 with a receiving system with electroacoustic transducers, a direction forming device for forming direction characteristics in main receiving directions which can be predetermined, and a downstream computation circuit for forming an angle function from group signals at the output of a direction forming device, with the main receiving directions being the independent variable in the angle functions, and having a Fourier transformation circuit positioned downstream of the computation circuit, characterized in that a simulation computation circuit (13) for forming at least one reference function (R) from support values of a parabola or the first Legendre polynomial as a function of the receiving system and its directional characteristics at a reference angle (α₃) which can be predetermined is connected to a Fourier transformation computer (22), in that the Fourier transformation circuit (21) and the Fourier transformation computer (22) are connected to a computation stage (23) for forming a complex-conjugate multiplication or a complex quotient, in that the computation stage (23) has a downstream phase calculation circuit (24) with a direction indication stage.

18. Apparatus according to Claim 17, characterized in that the phase calculation circuit (24) contains an absolute-magnitude forming device (26) in order to form the square of the magnitude of the quotient, and contains a downstream evaluation stage (27) in order to determine the amplitude and frequency, and in that the evaluation stage (27) is followed by a logic circuit (28) with direction indication.

## Revendications

1. Procédé pour viser des cibles rayonnant des sons ou réfléchissant de sons avec un équipement de réception couprenant des convertisseurs électroacoustiques (10) dont les signaux reçus sont traités par un interpréteur de direction (11) pour former différents signaux groupés qui sont affectés à des diagrammes directionnels voisins superposés, une fonction d'angle (W(αᵢ)) étant formée à partir de ces signaux groupés, laquelle est une fonction des sens de réception principaux (αᵢ) des diagrammes directionnels et dont le maximum apparaît sous un sens d'incidence du son (α) qui indique le gisement par rapport à la cible, caractérisé en ce qu'une fonction de référence (R(αᵢ)) est formée à partir des valeurs de base d'une parabole ou des premiers polynômes de Legendre en fonction de la position de réception et de ses diagrammes directionnels et que la fonction de référence et la fonction d'angle (W(αᵢ)) sont comparées puis décalées l'une par rapport à l'autre jusqu'à la concordance et leur angle de décalage lors de la concordance indique le gisement.

2. Procédé selon la revendication 1, caractérisé en ce que le maximum de la fonction de référence est placé dans le sens de réception principal dont le signal groupé présente le niveau le plus élevé.

3. Procédé selon la revendication 1 ou 2, caractérisé en ce que la comparaison est effectuée en formant l'intégrale de convolution ou la fonction de corrélation croisée de la fonction d'angle (W) avec la fonction de référence (R) et le maximum indique la concordance.

4. Procédé selon l'une des revendications 1 à 3, caractérisé en ce que la fonction de référence (R) simule une fonction d'angle lors de la réception d'au moins deux cibles sous un angle de référence du barycentre.

5. Procédé selon l'une des revendications 3 ou 4, caractérisé en ce que la fonction d'angle (W) est comparée avec les fonctions de référence associées à la ou aux au moins deux cibles et qu'une comparaison du maximum de l'intégrale de convolution ou de la fonction de corrélation est effectuée, laquelle indique si l'angle de décalage indique le gisement par rapport à une cible ou la direction d'un barycentre de deux ou de plusieurs cibles.

6. Procédé selon l'une des revendications 1 à 5, caractérisé en ce que la fonction d'angle (W) est formée et la fonction de référence (R) pour la même fréquence reçue est simulée avec les composantes de fréquence des signaux groupés qui présentent la même fréquence reçue.

7. Procédé selon la revendication 6, caractérisé en ce que les intégrales de convolution ou les fonctions de corrélation croisée sont formées et leur valeur moyenne est calculée pour chaque fréquence reçue.

8. Procédé selon l'une des revendications 3 à 7, caractérisé en ce que l'intégrale de convolution ou la fonction de corrélation croisée est différenciée et le point zéro déterminé de l'intégrale de convolution différenciée ou de la fonction de corrélation croisée différenciée indique le gisement par rapport à la cible ou la direction vers le barycentre d'au moins deux cibles.

9. Procédé selon la revendication 1 ou 2, caractérisé en ce que la fonction d'angle (W) formée par les signaux groupés reçus et au moins une fonction de référence (R) sont soumises à une transformation de Fourier dans un spectre complexe et un spectre de référence dans une plage de fréquences spatiales (x), que l'onde fondamentale du spectre et l'onde fondamentale de référence du spectre de fréquences spatiales sont déterminées, que l'onde fondamentale est comparée avec l'onde fondamentale de référence et que leur déphasage est déterminé, lequel indique le gisement par rapport à la cible ou la direction vers le barycentre d'au moins deux cibles (Z₁, Z₂).

10. Procédé selon la revendication 9, caractérisé en ce que la comparaison est effectuée par multiplication complexe conjuguée de l'onde fondamentale et de l'onde fondamentale de référence et que la phase du produit indique le déphasage.

11. Procédé selon la revendication 9, caractérisé en ce que la comparaison est effectuée par calcul du quotient de l'onde fondamentale et de l'onde fondamentale de référence et que la phase du quotient est déterminée et indique le déphasage.

12. Procédé selon la revendication 10, caractérisé en ce que le calcul du carré absolu diminué de la valeur « 1 » du quotient de l'onde fondamentale complexe et de l'onde de référence est calculé, que son amplitude et/ou sa fréquence sont déterminées, que l'amplitude indique un rapport de niveau de deux cibles disposées symétriquement par rapport au barycentre et la fréquence indique, après une composition avec la direction par rapport au barycentre, les gisements par rapport aux deux cibles (Z₁, Z₂).

13. Procédé selon la revendication 14, caractérisé en ce que l'amplitude et/ou la fréquence sont déterminées par des algorithmes d'évaluation.

14. Dispositif pour mettre en oeuvre le procédé selon les revendications 1 à 9 avec un équipement de réception comprenant des convertisseurs électroacoustiques, un interpréteur de direction pour former des diagrammes directionnels dans des sens de réception principaux pouvant être définis à l'avance et un circuit de calcul branché en aval et destiné à former une fonction d'angle à partir des signaux groupés à la sortie de l'interpréteur de direction, les sens de réception principaux étant la variable indépendante de la fonction d'angle, caractérisé en ce qu'il existe un circuit de calcul de simulation (13) pour former au moins une fonction de référence (R) à partir des valeurs de base d'une parabole ou des premiers polynômes de Legendre en fonction de la position de réception et de ses diagrammes directionnels sous un angle de référence (α₃) qui peut être défini à l'avance, et le circuit de calcul (12) pour former la fonction d'angle (W) est relié avec un arrangement de comparaison (14) destiné à réaliser la convolution ou la corrélation de la fonction d'angle (W) avec la fonction de référence (R), qu'après l'arrangement de comparaison (14) est branché un circuit d'évaluation (15) avec indicateur de gisement (16).

15. Dispositif selon la revendication 14, caractérisé en ce que le circuit d'évaluation (15) est conçu pour rechercher le maximum absolu.

16. Dispositif selon la revendication 14, caractérisé en ce que le circuit d'évaluation (15) contient un étage de différenciation (17) avec détecteur de passage à zéro branché en aval.

17. Dispositif pour mettre en oeuvre le procédé selon les revendications 9 à 13 avec un équipement de réception comprenant des convertisseurs électroacoustiques, un interpréteur de direction pour former des diagrammes directionnels dans des sens de réception principaux pouvant être définis à l'avance et un circuit de calcul branché en aval et destiné à former une fonction d'angle à partir des signaux groupés à la sortie de l'interpréteur de direction, les sens de réception principaux étant la variable indépendante de la fonction d'angle, et avec un circuit de transformation de Fourier branché en aval du circuit de calcul, caractérisé en ce qu'un circuit de calcul de simulation (13) pour former au moins une fonction de référence (R) à partir des valeurs de base d'une parabole ou des premiers polynômes de Legendre en fonction de la position de réception et de ses diagrammes directionnels sous un angle de référence (α₃) est interconnecté avec un calculateur de transformation de Fourier (22), que le circuit de transformation de Fourier (21) et le calculateur de transformation de Fourier (22) sont reliés avec un étage de calcul (23) pour former une multiplication complexe conjuguée ou un quotient complexe, qu'après l'étage de calcul (23) est branché un circuit de calcul de phase (24) comprenant un étage indicateur de gisement.

18. Dispositif selon la revendication 17, caractérisé en ce que le circuit de calcul de phase (24) est un interpréteur de valeur absolue (26) destiné à former le carré absolu du quotient et contient un étage (27) en aval destiné à déterminer l'amplitude et la fréquence et qu'après l'étage d'évaluation (27) est branché un circuit de composition (28) avec indicateur de gisement.
